(19) Europäisches Patentamt
European Patent Office
Office européen des brevets

(11) EP 3 932 975 A1

(12) # EUROPEAN PATENT APPLICATION
published in accordance with Art. 153(4) EPC

(43) Date of publication:
**05.01.2022 Bulletin 2022/01**

(21) Application number: **20762811.6**

(22) Date of filing: **19.02.2020**

(51) Int Cl.:
***C08J 3/20*** *(2006.01)* ***C08L 23/26*** *(2006.01)*
***C08L 77/06*** *(2006.01)*

(86) International application number:
**PCT/JP2020/006623**

(87) International publication number:
**WO 2020/175290 (03.09.2020 Gazette 2020/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.02.2019 JP 2019031722**

(71) Applicant: **Kuraray Co., Ltd.**
**Kurashiki-shi, Okayama 710-0801 (JP)**

(72) Inventor: **SEKIGUCHI, Kenji**
**Tsukuba-shi, Ibaraki 305-0841 (JP)**

(74) Representative: **Müller-Boré & Partner Patentanwälte PartG mbB**
**Friedenheimer Brücke 21**
**80639 München (DE)**

(54) **TUBE, AND POLYAMIDE RESIN COMPOSITION**

(57) Disclosed are: a tube containing a layer that contains 60 to 80% by mass of a semi-aromatic polyamide and 15 to 40% by mass of an elastomer modified with an unsaturated compound having at least one selected from a carboxy group and an acid anhydride group, wherein the layer has a phase-separated structure containing a phase (A) that contains the semi-aromatic polyamide, and a phase (B) that contains the elastomer, and the phase (A) is a continuous phase and the phase (B) is a disperse phase dispersed in the phase (A), and in a cross-sectional image of the layer as observed with an electron microscope, the average number of the phase (B) having a major axis diameter of 2 μm or more and existing per 100 square μm is 1/100 $\mu m^2$ or less; and a polyamide resin composition prepared by melt-kneading a semi-aromatic polyamide and an elastomer modified with an unsaturated compound having at least one selected from a carboxy group and an acid anhydride group, wherein the total concentration of the carboxy group and the acid anhydride group in 1 g of the elastomer is 85 to 250 μeq/g.

EP 3 932 975 A1

## Description

### Technical Field

The present invention relates to a tube having excellent heat resistant and also excellent flexibility and moldability.

### Background Art

A polyamide resin is excellent in strength, heat resistance and chemical resistance, and has heretofore been used for automobile components such as fuel pipes and fuel piping connectors for automobiles. For example, for long-life coolants (hereinafter "LLC") for use for cooling car engines and for tubes for circulating coolants for cooling air conditioners, a polyamide resin composition is used. For the tubes, aliphatic polyamides such as polyamide 12, polyamide 11 and polyamide 6 are widely used from the viewpoint of easiness in extrusion molding and flexibility, but on the other hand, some problems of poor chemical resistance and poor heat resistance are pointed out to these aliphatic polyamides. Especially these days, studies of resinification of tubes in which cooling water or high-temperature gas or oil flows have become actively made for improving fuel efficiency for automobiles, and tubes more excellent in chemical resistance and heat resistance than already-existing tubes are desired.
A semi-aromatic polyamide containing an aromatic dicarboxylic acid such as terephthalic acid is generally known to have more excellent chemical resistance and heat resistance than an aliphatic polyamide. A semi-aromatic polyamide is generally more rigid than an aliphatic polyamide and is therefore proposed to be alloyed with a flexibility improver such as an elastomer for imparting flexibility thereto in using for tubes (see PTLs 1 to 3).

### Citation List

### Patent Literature

PTL 1: JP 2006-176597 A
PTL 2: JP 2015-501341 A
PTL 3: WO2017/115699

### Summary of Invention

### Technical Problem

However, when the amount of an elastomer to be added is increased for imparting sufficient flexibility to a polyamide composition containing a semi-aromatic polyamide, a problem in relation to moldability has been pointed out to occur in that die drool may increase to worsen surface smoothness.
Accordingly, in consideration of the problems in conventional technology, an object of the present invention is to provide a tube having excellent heat resistance and also excellent flexibility and moldability, and a polyamide resin composition capable of giving the tube.

### Solution to Problem

As a result of assiduous studies, the present inventors have found that, when a polyamide resin composition prepared by melt-kneading a semi-aromatic polyamide and an elastomer is used to mold a tube, the resultant tube can have excellent heat resistance that the semi-aromatic polyamide has and can additionally have excellent moldability such as flexibility and surface smoothness, and after further studies made based on this finding, the inventors have completed the present invention.
Specifically, the present invention provides the following [1] and [2].

[1] A tube containing a layer that contains 60 to 80% by mass of a semi-aromatic polyamide and 15 to 40% by mass of an elastomer modified with an unsaturated compound having at least one selected from a carboxy group and an acid anhydride group, wherein:

the layer has a phase-separated structure containing a phase (A) that contains the semi-aromatic polyamide,

and a phase (B) that contains the elastomer, and the phase (A) is a continuous phase and the phase (B) is a disperse phase dispersed in the phase (A), and

in a cross-sectional image of the layer as observed with an electron microscope, the average number of the phase (B) having a major axis diameter of 2 μm or more and existing per 100 square μm is 1/100 $\mu m^2$ or less.

[2] A polyamide resin composition prepared by melt-kneading 60 to 80% by mass of a semi-aromatic polyamide and 15 to 40% by mass of an elastomer modified with an unsaturated compound having at least one selected from a carboxy group and an acid anhydride group, wherein the total concentration of the carboxy group and the acid anhydride group in 1 g of the elastomer is 85 to 250 μeq/g.

Advantageous Effects of Invention

According to the present invention, there can be provided a tube having excellent heat resistance and also excellent flexibility and moldability, and a polyamide resin composition capable of giving the tube.

Description of Embodiments

The tube of the present invention contains a layer that contains 60 to 80% by mass of a semi-aromatic polyamide and 15 to 40% by mass of an elastomer modified with an unsaturated compound having at least one selected from a carboxy group and an acid anhydride group, wherein:

the layer has a phase-separated structure containing a phase (A) that contains the semi-aromatic polyamide, and a phase (B) that contains the elastomer, and the phase (A) is a continuous phase and the phase (B) is a disperse phase dispersed in the phase (A), and

in a cross-sectional image of the layer as observed with an electron microscope, the average number of the phase (B) having a major axis diameter of 2 μm or more and existing per 100 square μm is 1/100 $\mu m^2$ or less.

The present invention also provides a polyamide resin composition capable of giving the tube. Specifically, the polyamide resin composition of the present invention is prepared by melt-kneading 60 to 80% by mass of a semi-aromatic polyamide and 15 to 40% by mass of an elastomer modified with an unsaturated compound having at least one selected from a carboxy group and an acid anhydride group, wherein the total concentration of the carboxy group and the acid anhydride group in 1 g of the elastomer is 85 to 250 μeq/g.

The polyamide resin composition that contains a semi-aromatic polyamide and an elastomer modified with an unsaturated compound having the above-mentioned functional group in a specific concentration can impart flexibility to the tube and can form the above-mentioned morphology to give the tube having a layer excellent in surface smoothness. Further, as containing a semi-aromatic polyamide, heat resistance intrinsic thereto can be given to the tube.

The polyamide resin composition and the tube of the present invention will be described more specifically hereinunder.

In the present specification, a description of "XX to YY" means "XX or more and YY or less". Also in the present specification, preferred embodiments are show, and a combination of two or more individual preferred embodiments is also a preferred embodiment. In the case where a matter expressed by a numerical range includes some numerical ranges, the lower limit and the upper limit thereof may be selectively combined to be a a preferred embodiment.

The elastomer modified with an unsaturated compound having at least one selected from a carboxy group and an acid anhydride group may be simply referred to as "elastomer".

"Tube" means a cylindrical structure including a pipe and a hose.

<Polyamide Resin Composition>

[Semi-aromatic Polyamide]

In the present invention, the semi-aromatic polyamide means a polyamide containing a dicarboxylic acid unit that consists primarily of an aromatic dicarboxylic acid unit and a diamine unit that consists primarily of an aliphatic diamine unit, or a polyamide containing a dicarboxylic acid unit that consists primarily of an aliphatic dicarboxylic acid unit and a diamine unit that consists primarily of an aromatic diamine unit. Here, "consists primarily of' is meant to consists of 50 to 100 mol%, preferably 60 to 100 mol% of all the units.

The polyamide resin composition contains the semi-aromatic polyamide in an amount of 60 to 80% by mass relative to 100% by mass of the polyamide resin composition. When the content of the semi-aromatic polyamide is less than 60% by mass, sufficient heat resistance could not be expressed, but when the content is more than 80% by mass,

flexibility is poor. The content of the semi-aromatic polyamide is preferably 63% by mass or more, more preferably 65% by mass or more, even more preferably 67% by mass or more, and is preferably 75% by mass or less.

Among semi-aromatic polyamides, the semi-aromatic polyamide for use in the present invention is preferably a polyamide containing a dicarboxylic acid unit that consists primarily of an aromatic dicarboxylic acid unit, and a diamine unit that consists primarily of an aliphatic diamine unit, more preferably a semi-aromatic polyamide containing a dicarboxylic acid unit that contains 50 to 100 mol% of an aromatic dicarboxylic acid unit, and a diamine unit that contains 60 to 100 mol% of an aliphatic diamine unit having 4 to 13 carbon atoms.

The dicarboxylic acid unit to constitute the semi-aromatic polyamide is, from the viewpoint of being a semi-aromatic polyamide having good chemical resistance and heat resistance, preferably such that the content of the aromatic dicarboxylic acid unit in the dicarboxylic acid unit falls within a range of 50 to 100 mol%, more preferably within a range of 75 to 100 mol%, even more preferably within a range of 90 to 100 mol%.

The aromatic dicarboxylic acid unit includes a terephthalic acid unit, a naphthalenedicarboxylic acid unit, an isophthalic acid unit, a 1,4-phenylenedioxy-diacetic acid unit, a 1,3-phenylenedioxy-diacetic acid unit, a diphenic acid unit, a diphenylmethane-4,4'-dicarboxylic acid unit, a diphenylsulfone-4,4'-dicarboxylic acid unit, and a 4,4'-biphenyldicarboxylic acid unit. The naphthalenedicarboxylic acid unit includes units derived from 2,6-naphthalenedicarboxylic acid, 2,7-naphthalenedicarboxylic acid and 1,4-naphthalenedicarboxylic aid, and is preferably a 2,6-naphthalenedicarboxylic acid unit.

Among these, the aromatic dicarboxylic acid unit is preferably a terephthalic acid unit and/or a naphthalenedicarboxylic acid unit. Accordingly, the semi-aromatic polyamide preferably contains a dicarboxylic acid unit that contains at least one selected from a terephthalic acid unit and a naphthalenedicarboxylic acid unit in an amount of 50 mol% or more relative to all the dicarboxylic acid units. The content of the dicarboxylic acid unit of at least one selected from a terephthalic acid unit and a naphthalenedicarboxylic acid unit relative to all the dicarboxylic acid units is preferably within a range of 50 to 100 mol%, more preferably within a range of 75 to 100 mol%, even more preferably within a range of 90 to 100 mol%.

The dicarboxylic acid unit to constitute the semi-aromatic polyamide may contain any other dicarboxylic acid unit than the aromatic dicarboxylic acid unit preferably within a range of less than 50 mol%. Examples of the other dicarboxylic acid unit include units derived from an aliphatic dicarboxylic acid such as oxalic acid, malonic acid, succinic acid, glutaric acid, adipic acid, pimellic acid, suberic acid, azelaic acid, sebacic acid, undecane-dicarboxylic acid, dodecane-dicarboxylic acid, dimethylmalonic acid, 2,2-diethylsuccinic acid, 2,2-dimethylglutaric acid, 2-methyladipic acid, and trimethyladipic acid; an alicyclic dicarboxylic acid such as 1,3-cyclopentane-dicarboxylic acid, 1,3-cyclohexane-dicarboxylic acid, 1,4-cyclohexane-dicarboxylic acid, cycloheptane-dicarboxylic acid, cyclooctane-dicarboxylic acid, and cyclodecane-dicarboxylic acid; and an aromatic dicarboxylic acid such as terephthalic acid, isophthalic acid, diphenic acid, 4,4'-biphenyldicarboxylic acid, diphenylmethane-4,4'-dicarboxylic acid, and diphenylsulfone-4,4'-dicarboxylic acid; and one or more of these may be contained. The content of the other dicarboxylic acid unit in the dicarboxylic acid unit is preferably 25 mol% or less, more preferably 10 mol% or less. The semi-aromatic polyamide for use in the present invention may further contain a unit derived from a polycarboxylic acid such as trimellitic acid, trimesic acid or pyromellitic acid, within a melt-moldable range.

Preferably, the semi-aromatic polyamide contains an aliphatic diamine unit having 4 to 13 carbon atoms in an amount of 60 mol% or more relative to all the diamine units. Using the semi-aromatic polyamide that contains an aliphatic diamine unit having 4 to 13 carbon atoms within the range, a polyamide resin composition excellent in toughness, heat resistance, chemical resistance and lightweight can be obtained. The content of the aliphatic diamine unit having 4 to 13 carbon atoms in the diamine unit is preferably within a range of 60 to 100 mol%, more preferably 75 to 100 mol%, even more preferably within a range of 90 to 100 mol%.

Examples of the aliphatic diamine unit having 4 to 13 carbon atoms include units derived from a linear aliphatic diamine such as 1,4-butanediamine, 1,5-pentanediamine, 1,6-hexanediamine, 1,7-heptanediamine, 1,8-octanediamine, 1,9-nonanediamine, 1,10-decanediamine, 1,11-undecanediamine, 1,12-dodecanediamine and 1,13-tridecanediamine; and a branched aliphatic diamine such as 2-methyl-1,5-pentanediamine, 3-methyl-1,5-pentanediamine, 2,2,4-trimethyl-1,6-hexanediamine, 2,4,4-trimethyl-1,6-hexanediamine, 2-methyl-1,8-octanediamine, and 5-methyl-1,9-nonanediamine; and one or more of these may be contained.

The aliphatic diamine unit having 4 to 13 carbon atoms is preferably at least one selected from units derived from 1,4-butanediamine, 1,6-hexanediamine, 1,9-nonanediamine, 2-methyl-1,8-octanediamine and 1,10-decanediamine, and from the viewpoint of providing a polyamide resin composition more excellent in heat resistance, low water absorption and liquid chemical resistance, units derived from 1,9-nonanediamine and/or 2-methyl-1,8-octanediamine are more preferred, and a 1,9-nonanediamine unit and a 2-methyl-1,8-octanediamine unit are even more preferred. In the case where the aliphatic diamine unit contains both a 1,9-nonanediamine unit and a 2-methyl-1,8-octanediamine unit, the molar ratio of the 1,9-nonanediamine unit to the 2-methyl-1,8-octanediamine unit is preferably within a range of 1,9-nonanediamine unit/2-methyl-1,8-octanediamine unit = 95/5 to 40/60, more preferably within a range of 90/10 to 40/60, even more preferably within a range of 80/20 to 40/60.

The diamine unit to constitute the semi-aromatic polyamide may contain any other diamine unit than the aliphatic diamine unit having 4 to 13 carbon atoms preferably within a range less than 40 mol%. Examples of the other diamine unit include units derived from an aliphatic diamine having 3 or less carbon atoms such as ethylenediamine, 1,2-propanediamine, 1,3-propanediamine, and 2-methyl-1,3-propanediamine; an alicyclic diamine such as cyclohexanediamine, methylcyclohexanediamine and isophoronediamine; and an aromatic diamine such as p-phenylenediamine, m-phenylenediamine, xylylenediamine, 4,4'-diaminodiphenylmethane, 4,4'-diaminodiphenyl sulfone, and 4,4'-diaminodiphenyl ether; and one or more of these may be contained. IN the diamine unit, the content of the other diamine unit is preferably 25 mol% or less, more preferably 10% or less.

The semi-aromatic polyamide may further contain an aminocarboxylic acid unit and/or a lactam unit within a range not detracting from the advantageous effects of the present invention.

Examples of the aminocarboxylic acid unit include units derived from 11-aminoundecanoic acid and 12-aminododecanoic acid, and two or more aminocarboxylic acids may be contained. The content of the aminocarboxylic acid unit in the semi-aromatic polyamide is preferably 40 mol% or less, relative to 100 mol% of all the monomer units to constitute the semi-aromatic polyamide, more preferably 20 mol% or less, even more preferably 10 mol% or less.

The semi-aromatic polyamide may contain a lactam unit within a range not detracting from the advantageous effects of the present invention. Examples of the lactam unit include units derived from ε-caprolactam, enantholactam, undecane-lactam, lauryl lactam, α-pyrrolidone, and α-piperidone, and 2 or more lactam units may be contained. The content of the lactam unit in the semi-aromatic polyamide is preferably 40 mol% or less relative to 100 mol% of all the monomer units to constitute the semi-aromatic polyamide, more preferably 20 mol% or less, even more preferably 10 mol% or less.

Typically, the semi-aromatic polyamide that contains a dicarboxylic acid unit consisting primarily of an aromatic dicarboxylic acid unit and a diamine unit consisting primarily of an aliphatic diamine unit having 4 to 13 carbon atoms includes polytetramethylene-terephthalamide (polyamide 4T), polypentamethylene-terephthalamide (polyamide 5T), polyhexamethylene-terephthalamide (polyamide 6T), polynonamethylene-terephthalamide (polyamide 9T), poly(2-methyloctamethylene)terephthalamide (nylon M8T), polynonamethylene-terephthalamide/poly(2-methyloctamethylene)terephthalami de copolymer (nylon 9T/M8T), polynonamethylenenaphthalene-dicarboxamide (polyamide 9N), polynonamethylenenaphthalene-dicarboxamide/poly(2-methyloctamethylene)nap hthalenedicarboxamide copolymer (nylon 9N/M8N), polydecamethylene-terephthalamide (polyamide 10T), polyhexamethylene-isophthalamide (polyamide 61), copolymer of polyamide 61 and polyamide 6T (polyamide 6I/6T), copolymer of polyamide 6T and polyundecanamide (polyamide 11) (polyamide 6T/11), and copolymer of polyamide 10T and polyundecanamide (polyamide 11) (polyamide 10T/11).

Among these, at least one selected from polyamide 10T/11, polynonamethylenenaphthalene-dicarboxamide (polyamide 9N), polynonamethylenenaphthalene-dicarboxamide/poly(2-methyloctamethylene)nap hthalenedicarboxamide copolymer (nylon 9N/M8N), polynonamethylene-terephthalamide (polyamide 9T), polynonamethylene-terephthalamide/poly(2-methyloctamethylene)terephthalami de copolymer (nylon 9T/M8T), and polydecamethylene-terephthalamide (polyamide 10T) is preferred; at least one selected from polynonamethylenenaphthalane-dicarboxamide/poly(2-methylocatamethylene)na phthalene-dicarboxamide copolymer (nylon 9N/M8N), polynonamethylene-terephthalamide/poly(2-methyloctamethylene)terephthalami de copolymer (nylon 9T/M8T) and polyamide 10T/11 is more preferred; and polynonamethylene-terephthalamide/poly(2-methyloctamethylene)terephthalami de copolymer (nylon 9T/M8T) is even more preferred.

On the other hand, in the semi-aromatic polyamide that contains a dicarboxylic acid unit consisting primarily of an aliphatic dicarboxylic acid unit and a diamine unit consisting primarily of an aromatic diamine unit, the aliphatic dicarboxylic acid unit includes units derived from the above-mentioned aliphatic dicarboxylic acids, and the semi-aromatic polyamide of the type may contain one or more of these units. The aromatic diamine unit includes units derived from the above-mentioned aromatic diamines, and one or more of these may be contained. The semi-aromatic polyamide may further contain any other unit within a range not detracting from the advantageous effects of the present invention.

Typically, the semi-aromatic polyamide that contains a dicarboxylic acid unit consisting primarily of an aliphatic dicarboxylic acid unit and a diamine unit consisting primarily of an aromatic diamine unit includes polymetaxylyleneadipamide (MXD6), polyparaxylylenesebacamide (PXD10).

Of the semi-aromatic polyamide of the present invention, preferably, 10 mol% or more of the terminal group of the molecular chain is blocked with a terminal blocking agent. Using a semi-aromatic polyamide whose terminal blocking rate is 10 mol% or more, a semi-aromatic polyamide resin composition more excellent in physical properties such as melt stability and hot water resistance can be obtained.

As the terminal blocking agent, a monofunctional compound reactive with a terminal amino group or a terminal carboxy group is usable. Specifically, the compound includes a monocarboxylic acid, an acid anhydride, a monoisocyanate, a monoacid halide, a monoester, a monoalcohol and a monoamine. From the viewpoint of reactivity and blocked terminal stability, a monocarboxylic acid is preferred for the terminal blocking agent for a terminal amino group, and a monoamine is preferred for the terminal blocking agent for a terminal carboxy group. From the viewpoint of easy handleability, a monocarboxylic acid is more preferred for the terminal blocking agent.

Not specifically limited, the monocarboxylic acid usable as the terminal blocking agent may be any one reactive with an amino group, and examples thereof include an aliphatic monocarboxylic acid such as acetic acid, propionic acid, butyric acid, valeric acid, caproic acid, caprylic acid, lauric acid, tridecanoic acid, myristic acid, palmitic acid, stearic acid, pivalic acid, and isobutyric acid; an alicyclic monocarboxylic acid such as cyclopentanecarboxylic acid and cyclohexanecarboxylic acid; an aromatic monocarboxylic acid such as benzoic acid, toluic acid, α-naphthalenecarboxylic acid, β-naphthalenecarboxylic acid, methylnaphthalene-carboxylic acid, and phenylacetic acid; and an arbitrary mixture thereof. Among these, from the viewpoint of reactivity, blocked terminal stability and cost, at least one selected from acetic acid, propionic acid, butyric acid, valeric acid, caproic acid, caprylic acid, lauric acid, tridecanoic acid, myristic acid, palmitic acid, stearic acid and benzoic acid is preferred.

Not specifically limited, the monoamine usable as the terminal blocking gent may be any one reactive with a carboxy group, and examples thereof include an aliphatic monoamine such as methylamine, ethylamine, propylamine, butylamine, hexylamine, octylamine, decylamine, stearylamine, dimethylamine, diethylamine, dipropylamine and dibutylamine; an alicyclic monoamine such as cyclohexylamine and dicyclohexylamine; an aromatic monoamine such as aniline, toluidine, diphenylamine and naphthylamine; and an arbitrary mixture thereof. Among these, from the viewpoint of reactivity, high boiling point, blocked terminal stability and cost, at least one selected from butylamine, hexylamine, octylamine, decylamine, stearylamine, cyclohexylamine and aniline is preferred.

The semi-aromatic polyamide is preferably such that the inherent viscosity [$\eta_{inh}$] of a solution thereof dissolved in a solvent of concentrated sulfuric acid to have a concentration of 0.2 g/dl, as measured at a temperature of 30°C, is 0.6 dl/g or more, more preferably 0.8 dl/g or more, more preferably 0.6 dl/g or more, even more preferably 1.0 dl/g or more, and is preferably 2.0 dl/g or less, more preferably 1.8 dl/g or less, even more preferably 1.6 dl/g or less. When the inherent viscosity [$\eta_{inh}$] of the polyamide falls within the range, various properties such as moldability improve more. The inherent viscosity [$\eta_{inh}$] can be calculated according to a relational expression $\eta_{inh}$ = [ln($t_1/t_0$)]/c in which to (sec) represents a flow time of the solvent (concentrated sulfuric acid), $t_1$ (sec) represents a flow time of the sample solution, and c (g/dl) represents a sample concentration (that is, 0.2 g/dl).

The terminal amino group content ([$NH_2$]) of the semi-aromatic polyamide is preferably 5 to 60 μeq/g, more preferably within a range of 5 to 50 μeq/g, even more preferably within a range of 5 to 30 μeq/g. When the terminal amino group content ([$NH_2$]) is 5 μeq/g or more, the miscibility between the semi-aromatic polyamide and the elastomer to be mentioned below is good. When the terminal amino group content ([$NH_2$]) is 60 μeq/g or less, and in the case where an acid-modified elastomer to be mentioned below is used as the elastomer, the terminal amino group and the modified moiety of the elastomer can be prevented from reacting together to form a gel.

The terminal amino group content ([$NH_2$]) as referred to in this specification indicates the amount of the terminal amino group (unit: μeq) in 1 g of the semi-aromatic polyamide and can be determined according to a neutralization titration method using an indicator.

The semi-aromatic polyamide containing a dicarboxylic acid unit and a diamine unit, whose terminal amino group content ([$NH_2$]) falls within the above range, can be produced, for example, as follows.

First, a dicarboxylic acid and a diamine, and optionally an aminocarboxylic acid, a lactam, a catalyst and a terminal blocking agent are mixed to give a nylon salt. At that time, in the case where the molar number (X) of all the carboxy groups contained in the reaction materials and the molar number (Y) of all the amino groups contained therein are controlled to satisfy the following expression (2):

$$-0.5 \leq [(Y-X)/Y]\times 100 \leq 2.0 \qquad (2),$$

a semi-aromatic polyamide whose terminal amino group content ([$NH_2$]) is 5 to 60 μeq/g can be produced with ease, and the case is preferred. Next, the resultant nylon salt is heated at a temperature of 200 to 250°C to give a prepolymer whose inherent viscosity [$\eta_{inh}$] in a concentrated sulfuric acid at 30°C is 0.10 to 0.60 dlL/g, and this is further polymerized to give a higher polymer of a semi-aromatic polyamide for use in the present invention. When the inherent viscosity [$\eta_{inh}$] of the prepolymer falls within a range of 0.10 to 0.60 dLl/g, the molar balance between the carboxy group and the amino group can be prevented from being broken and the polymerization rate can be prevented from lowering during the step of further polymerization for molecular weight increase, and accordingly in the case, a semi-aromatic polyamide having a smaller molecular weight fluctuation and excellent in various properties and moldability can be obtained. In the case where the step of further polymerization for molecular weight increase is carried out according to a solid-phase polymerization method, preferably, the reaction is carried out under reduced pressure or in an inert gas flow, and in the case where the polymerization temperature falls within a range of 200 to 280°C, the polymerization rate can be large, productivity can be bettered, and discoloration and gelation can be effectively prevented. In the case where the step of further polymerization for molecular weight increase is carried out using a melt extruder, the polymerization temperature is preferably 370°C or lower, and under the polymerization condition, the formed polyamide decomposes little, and

therefore a semi-aromatic polyamide deteriorated little can be obtained.

Examples of the catalyst usable in producing the semi-aromatic polyamide include phosphoric acid, phosphorous acid, hypophosphorous acid, and salts and esters thereof. Examples of the salts and esters include salts of phosphoric acid, phosphorous acid or hypophosphorous acid with a metal such as potassium, sodium, magnesium, vanadium, calcium, zinc, cobalt, manganese, tin, tungsten, germanium, titanium or antimony; an ammonium salt of phosphoric acid, phosphorous acid or hypophosphorous acid; and an ethyl ester, an isopropyl ester, a butyl ester, a hexyl ester, an isodecyl ester, an octadecyl ester, a decyl ester, a stearyl ester or a phenyl ester of phosphoric acid, phosphorous acid or hypophosphorous acid.

The amount of the catalyst to be used is preferably 0.01% by mass or more relative to 100% by mass of the total mass of the raw material, more preferably 0.05% by mass or more, and is preferably 1.0% by mass or less, more preferably 0.5% by mass or less. When the amount of the catalyst is the lower limit or more, polymerization can go on well. When the amount is the upper limit or less, catalyst-derived impurities may hardly form and, for example, when the polyamide or a polyamide resin composition containing it is molded by extrusion, trouble by such impurities can be prevented.

[Elastomer]

The polyamide resin composition contains an elastomer modified with an unsaturated compound having a carboxy group and/or an acid anhydride group in an amount of 15 to 40% by mass relative to 100% by mass of the polyamide resin composition. When the content of the elastomer is less than 15% by mass, flexibility is poor, but when it is more than 40% by mass, heat resistance is difficult to express.

From the viewpoint of imparting flexibility and impact resistance, the content of the elastomer is preferably 19% by mass or more, more preferably 25% by mass or more. From the viewpoint of moldability, the content of the elastomer is preferably 35% by mass or less, more preferably 31% by mass or less.

In one embodiment of the polyamide resin composition of the present invention, the content of the elastomer may be controlled depending on the flexural modulus of the molded article of the composition. From the viewpoint of improving the flexibility of the tube containing the composition, the content of the elastomer is preferably so controlled that the flexural modulus of the molded article of the polyamide resin composition, as measured under the condition of 23°C and 50% RH according to ISO 178 (4th Ed., 2001), could be 1.8 GPa or less, more preferably 1.5 GPa or less, even more preferably 1.2 GPa or less. The content of the elastomer is, from the viewpoint of expressing the function as a tube, preferably so controlled that the flexural modulus could be 0.3 GPa or more.

For example, the elastomer for use in the present invention may be one prepared by modifying an $\alpha$-olefin-based copolymer, an (ethylene and/or propylene)/($\alpha$,$\beta$-unsaturated carboxylic acid and/or unsaturated carboxylate)-based copolymer, an ionomer, or an aromatic vinyl compound/conjugated diene compound-based block copolymer (hereinafter these may be referred to as "copolymer") with an unsaturated compound having at least one selected from a carboxy group and an acid anhydride group. When the copolymer is modified with such an unsaturated compound, the terminal amino group that the semi-aromatic polyamide has can react with the carboxy group and/or the acid anhydride group that the modifying component has to enhance the interfacial affinity between the semi-aromatic polyamide phase and the elastomer phase, thereby improving impact resistance and elongation characteristics to express flexibility. Among the above, a polymer prepared by modifying an $\alpha$-olefin-based copolymer with an unsaturated compound having a carboxy group and/or an acid anhydride group is preferred, and a polymer prepared by modifying an ethylene-butene copolymer with the unsaturated compound is more preferred.

Examples of the unsaturated compound having a carboxy group to be used in the elastomer modified with an unsaturated compound having a carboxy group and/or an acid anhydride group include an $\alpha$,$\beta$-unsaturated carboxylic acid such as acrylic acid, methacrylic acid, maleic acid, fumaric acid, and itaconic acid. The unsaturated compound having an acid anhydride group includes a dicarboxylic acid anhydride having an $\alpha$,$\beta$-unsaturated bond, such as maleic anhydride and itaconic anhydride. The unsaturated compound having a carboxy group and/or an acid anhydride group is preferably a dicarboxylic acid anhydride having an $\alpha$,$\beta$-unsaturated bond, more preferably maleic anhydride.

The total concentration of the carboxy group and the acid anhydride group in 1 g of the elastomer is preferably within a range of 85 to 250 $\mu$eq/g, more preferably within a range of 90 to 220 $\mu$eq/g, even more preferably within a range of 95 to 210 $\mu$eq/g. When the content of the carboxy group and the acid anhydride group falls within the above range, a tube excellent in surface appearance can be molded by extrusion, and a tube excellent in surface smoothness is easy to obtain.

The total concentration of the carboxy group and the acid anhydride group in the polyamide resin composition is difficult to specify since the terminal amino group of polyamide reacts with the carboxy group and the acid anhydride group during the melt-kneading process.

The copolymer includes an $\alpha$-olefin-based copolymer, an (ethylene and/or propylene)/($\alpha$,$\beta$-unsaturated carboxylic acid and/or unsaturated carboxylate)-based copolymer, an ionomer, and an aromatic vinyl compound/conjugated

diene compound-based block copolymer. One alone or two or more kinds of these copolymers may be used either singly or as combined.

The α-olefin-based copolymer includes a copolymer of ethylene and an α-olefin having 3 or more carbon atoms, and a copolymer of propylene and an α-olefin having 4 or more carbon atoms. The α-olefin-based copolymer is preferably a copolymer of ethylene and an α-olefin having 3 or more carbon atoms.

Examples of the α-olefin having 3 or more carbon atoms include propylene, 1-butene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 9-methyl-1-decene, 11-methyl-1-dodecene, and 12-ethyl-1-tetradecene. One or more of these can be used. Among these, the α-olefin having 3 or more carbon atoms is preferably at least one selected from the group consisting of propylene, 1-butene, 1-pentene, 1-hexene, 1-heptene and 1-octene, more preferably 1-butene.

In addition, a polyene of a non-conjugated diene, such as 1,4-pentadiene, 1,4-hexadiene, 1,5-hexadiene, 1,4-octadiene, 1,5-octadiene, 1,6-octadiene, 1,7-octadiene, 2-methyl-1,5-hexadiene, 6-methyl-1,5-heptadiene, 7-methyl-1,6-octadiene, 4-ethylidene-8-methyl-1,7-nonadiene, 4,8-dimethyl-1,4,8-decatriene (DMDT), dicyclopentadiene, cyclohexadiene, cyclooctadiene, 5-vinylnorbornene, 5-ethylidene-2-norbornene, 5-methylene-2-norbornene, 5-isopropylidene-2-norbornene, 6-chloromethyl-5-isopropenyl-2-norbornene, 2,3-diisopropylidene-5-norbornene, 2-ethylidene-3-isopropylidene-5-norbornene, and 2-propenyl-2,5-norbornadiene may also be copolymerized. One or more of these may be used.

The (ethylene and/or propylene)/(α,β-unsaturated carboxylic acid and/or unsaturated carboxylate)-based copolymer is a polymer prepared by copolymerizing ethylene and/or propylene with an α,β-unsaturated carboxylic acid and/or unsaturated carboxylate, and the α,β-unsaturated carboxylic acid monomer includes acrylic acid and methacrylic acid, and the α,β-unsaturated carboxylate monomer includes a methyl ester, an ethyl ester, a propyl ester, a butyl ester, a pentyl ester, a hexyl ester, a heptyl ester, an octyl ester, a nonyl ester, and a decyl ester of the unsaturated carboxylic acid. One or more of these may be used.

The ionomer is one prepared through ionization of an olefin and α,β-unsaturated carboxylic acid copolymer by neutralization of at least a part of the carboxyl group therein with a metal ion. The olefin is preferably ethylene and the α,β-unsaturated carboxylic acid is preferably acrylic acid and methacrylic acid, but are not limited to those exemplified here. An unsaturated carboxylate monomer may be copolymerized. The metal ion includes Al, Sn, Sb, Ti, Mn, Fe, Ni, Cu, Zn and Cd, in addition to an alkali metal and an alkaline earth metal such as Li, Na, K, Mg, Ca, Sr and Ba. One or more of these may be used.

The aromatic vinyl compound/conjugated diene compound-based block copolymer is a block copolymer composed of an aromatic vinyl compound-based polymer block and a conjugated diene-based polymer block, and a block copolymer having at least one aromatic vinyl compound-based polymer block and at least one conjugated diene-based polymer block is used. In the block copolymer, the unsaturated bond in the conjugated diene-based polymer may be hydrogenated.

The aromatic vinyl compound-based polymer block is a polymer block consisting primarily of a structural unit derived from an aromatic vinyl compound. The aromatic vinyl compound in the case includes styrene, α-methylstyrene, o-methylstyrene, m-methylstyrene, p-methylstyrene, 2,4-dimethylstyrene, vinylnaphthalene, vinylanthracene, 4-propylstyrene, 4-cyclohexylstyrene, 4-dodecylstyrene, 2-ethyl-4-benzylstyrene, and 4-(phenylbutyl)styrene, and one or more of these may be used. The aromatic vinyl compound-based polymer may have, as the case may be, a minor amount of a structural unit of any other unsaturated monomer. The conjugated diene-based polymer block is a polymer block formed of one or more kinds of a conjugated diene compound such as butadiene, chloroprene, isoprene, 2,3-dimethyl-1,3-butadiene, 1,3-pentadiene, 4-methyl-1,3-pentadiene, and 1,3-hexadiene. In a hydrogenated aromatic vinyl compound/conjugated diene compound-based block copolymer, the unsaturated bond moiety in the conjugated diene polymer block is partly or wholly hydrogenated.

The molecular structure of the aromatic vinyl compound/conjugated diene compound-based block copolymer and a hydrogenate thereof may be linear, branched, radial or a combination thereof. Among these, as the aromatic vinyl compound/conjugated diene compound-based block copolymer and/or the hydrogenate thereof, one or more of a diblock copolymer in which one aromatic vinyl compound-based polymer block and one conjugated diene-based polymer block bond linearly, a triblock copolymer in which three polymer blocks bond linearly in an orderly manner of an aromatic vinyl compound-based polymer block/a conjugated diene-based polymer block/an aromatic vinyl compound-based polymer block, and hydrogenates thereof are preferably used, and these include an unhydrogenated or hydrogenated styrene/isoprene block copolymer, an unhydrogenated or hydrogenated styrene/isoprene/styrene block copolymer, an unhydrogenated or hydrogenated styrene/butadiene/styrene block copolymer, and an unhydrogenated or hydrogenated styrene/isoprene/butadiene/styrene block copolymer.

[Deterioration Inhibitor]

The polyamide resin composition of the present invention may further contain a deterioration inhibitor for the purpose of improving the thermal aging resistance and the hydrolysis resistance thereof.

The deterioration inhibitor includes an antioxidant such as a copper-based stabilizer, a phenol-based thermal stabilizer, a phosphorus-based thermal stabilizer, and a sulfur-based thermal stabilizer. The deterioration inhibitor also includes a hydrolysis inhibitor such as a carbodiimide compound. One alone or two or more kinds of these deterioration inhibitors may be used either singly or as combined.

Preferably, the polyamide resin composition contains a deterioration inhibitor in an amount of 0.3 to 5% by mass relative to 100% by mass of the polyamide resin composition, more preferably 0.4 to 3% by mass, even more preferably 0.6 to 2% by mass. When the content of the deterioration inhibitor falls within the range, a composition excellent in thermal aging resistance and hydrolysis resistance and generating little gas in molding can be obtained.

The copper-based stabilizer can be used as a mixture of a copper compound and a metal halide, and regarding the proportion of a copper compound and a metal halide in the polyamide resin composition, preferably, a copper compound and a metal halide are contained in the polyamide resin composition in such a manner that the ratio of the total molar amount of halogen to the total molar amount of copper (halogen/copper) could be 2/1 to 50/1. The ratio (halogen/copper) is preferably 3/1 or more, more preferably 4/1 or more, even more preferably 5/1 or more, and is preferably 45/1 or less, more preferably 40/1 or less, even more preferably 30/1 or less. In the case where the ratio (halogen/copper) is the lower limit or more, copper deposition and metal corrosion in molding can be effectively prevented. In the case where the ratio (halogen/copper) is the upper limit or less, corrosion of screws in a molding machine can be more effectively prevented without interfering with the mechanical properties such as tensile properties of the resultant polyamide resin composition.

Examples of the copper compound include copper halide, copper acetate, copper propionate, copper benzoate, copper adipate, copper terephthalate, copper isophthalate, copper salicylate, copper nicotinate, copper stearate, and copper complexes coordinating with a chelating agent such as ethylenediamine and ethylenediaminetetraacetic acid. Examples of the copper halide include copper iodide; copper bromide such as cuprous bromide and cupric bromide; and copper chloride such as cuprous chloride. Among these copper compounds, at least one selected from the group consisting of copper halide and copper acetate is preferred from the viewpoint of excellent thermal aging resistance and excellent performance to prevent metal corrosion in screws or cylinder parts during extrusion, and at least one selected from the group consisting of copper iodide, copper bromide, copper chloride and copper acetate is more preferred, at least one selected from the group consisting of copper iodide, copper bromide and copper acetate is even more preferred. One alone or two or more kinds of copper compounds may be used either singly or as combined.

As the metal halide, those not corresponding to the copper compound can be used, and salts of a Group 1 or Group 2 metal element of the Periodic Table and a halogen are preferred. Examples thereof include potassium iodide, potassium bromide, potassium chloride, sodium iodide and sodium chloride. Among these, from the viewpoint of the excellent thermal aging resistance and the high-temperature heat resistance of the resultant polyamide resin composition and the ability thereof to prevent metal corrosion, at least one selected form the group consisting of potassium iodide and potassium bromide is preferred, and potassium iodide is more preferred. One alone or two or more kinds of metal halides may be used either singly or as combined.

Examples of the phenol-based thermal stabilizer include a hindered phenol compound. The hindered phenol compound has a property to impart heat resistance and lightfastness to resins such as polyamides.

Examples of the hindered phenol compound include 2,2-thio-diethylenebis[3-(3,5-di-tert-butyl-4-hydroxyphenyl) propionate], N,N'-hexane-1,6-diylbis[3-(3,5-di-tert-butyl-4-hydroxyphenylpropionamide), pentaerythrityl-tetrakis[3-(3,5-di-tert-butyl-4-hydroxyphenyl) propionate], N,N'-hexamethylenebis(3,5-di-tert-butyl-4-hydroxyphenyl)propionamide, triethyleneglycol-bis(3-tert-butyl-4-hydroxy-5-methylphenyl) propionate, hexamethylenebis(3-(3,5-di-tert-butyl-4-hydroxyphenyl) propionate), 3,9-bis{2-[3-(3-tert-butyl-4-hydroxy-5-methylphenyl)propionyloxyl-1,1-dimethylet hyl}-2,4,8,10-tetroxaspiro[5.5]undecane, tris(3,5-di-tert-butyl-4-hydroxybenzyl) isocyanurate, 3,5-di-tert-butyl-4-hydroxybenzyl phosphonate diethyl ester, 1,3,5-trimethyl-2,4,6-tris(3,5-di-tert-butyl-4-hydroxybenzyl)benzene, and 1,3,5-tris(4-tert-butyl-3-hydroxy-2,6-dimethylbenzyl) isocyanurate.

One alone or two or more kinds of the phenol-based thermal stabilizers can be used either singly or as combined. In particular, from the viewpoint of improving heat resistance, 3,9-bis{2-[3-(3-tert-butyl-4-hydroxy-5-methylphenyl)propionyloxy]-1,1-dimethylet hyl}-2,4,8,10-tetroxaspiro[5.5]undecane is preferred.

Examples of the phosphorus-based stabilizer include monosodium phosphate, disodium phosphate, trisodium phosphate, sodium phosphite, calcium phosphite, magnesium phosphite, manganese phosphite, pentaerythritol-type phosphite compound, trioctyl phosphite, trilauryl phosphite, octyldiphenyl phosphite, trisisodecyl phosphite, phenyldiisodecyl phosphite, phenyldi(tridecyl) phosphite, diphenylisooctyl phosphite, diphenylisodecyl phosphite, diphenyl(tridecyl) phosphite, triphenyl phosphite, trioctadecyl phosphite, tridecyl phosphite, tri(nonylphenyl) phosphite, tris(2,4-di-tert-butylphenyl) phosphite, tris(2,4-di-tert-butyl-5-methylphenyl) phosphite, tris(butoxyethyl) phosphite, 4,4'-butylidene-bis(3-methyl-6-tert-butylphenyl-tetratridecyl) diphosphite, tetra(C12 to C15 mixed alkyl)-4,4'-isopropylidenediphenyl diphosphite, 4,4'-isopropylidenebis(2-tert-butylphenyl)/di(nonylphenyl) phosphite, tris(biphenyl) phosphite, tetra(tridecyl)-1,1,3-tris(2-methyl-5-tert-butyl-4-hydroxyphenyl)butane diphosphite, tetra(tridecyl)-4,4'-butylidenebis(3-methyl-6-tert-butylphenyl) diphosphite, tetra(C1 to C15 mixed alkyl)-4,4'-isopropylidenediphenyl diphosphite, tris(mono, di-mixed nonylphenyl) phosphite, 4,4'-isopropylidenebis(2-tert-butylphenyl)/di(nonylphenyl) phosphite, 9,10-dihydro-9-oxa-10-phosphaphenanthlene-10-oxide, tris(3,5-di-tert-butyl-4-hydroxyphenyl) phosphite, hydrogenated 4,4'-isopropylidenediphenyl polyphosphite, bis(octylphenyl)/bis(4,4'-butylidenebis(3-methyl-6-tert-butylphenyl))/1,6-hexanol diphosphite, hexatridecyl-1,1,3-tris(2-methyl-4-hydroxy-5-tert-butylphenyl) diphosphite, tris(4,4'-isopropylidenebis(2-tert-butylphenyl) phosphite, tris(1,3-stearoyloxyisopropyl) phosphite, 2,2-methylenebis(4,6-di-tert-butylphenyl)octyl phosphite, 2,2-methylenebis(3-methyl-4,6-di-tert-butylphenyl)-2-ethylhexyl phosphite, tetrakis(2,4-di-tert-butyl-5-methylphenyl)-4,4'-biphenylene diphosphite, tetrakis(2,4-di-tert-butylphenyl)-4,4'-biphenylene diphosphite, and 6-[3-(3-tert-butyl-4-hydroxy-5-methylphenyl)propoxyl-2,4,8,10-tetra-tert-butyldib enzo[d,f][1,3,2]-dioxaphosphepin.

Examples of the sulfur-based thermal stabilizer include distearyl 3,3'-thiodipropionate, pentaerythrityl tetrakis(3-laurylthiopropionate), 2-mercaptobenzimidazole, didodecyl 3,3'-thiodipropionate, ditridecyl 3,4'-thiodipropionate, and 2,2-bis[[3-(dodecylthio)-1-oxopropoxylmethyl]-1,3-propanediyl ester.

Examples of the amine-based thermal stabilizer include 4,4'-bis($\alpha$,$\alpha$-dimethylbenzyl)diphenylamine (e.g., "Nocrac CD" by Ouchi Shinko Chemical Industrial Co., Ltd.), N,N'-di-2-naphthyl-p-phenylenediamine (e.g., "Nocrac White" by Ouchi Shinko Chemical Industrial Co., Ltd.), N,N'-diphenyl-p-phenylenediamine (e.g., "Nocrac DP" by Ouchi Shinko Chemical Industrial Co., Ltd.), N-phenyl-1-naphthylamine (e.g., "Nocrac PA" by Ouchi Shinko Chemical Industrial Co., Ltd.), N-phenyl-N'-isopropyl-p-phenylenediamine (e.g., "Nocrac 810-NA" by Ouchi Shinko Chemical Industrial Co., Ltd.), N-phenyl-N'-(1,3-dimethylbutyl)-p-phenylenediamine (e.g., "Nocrac 6C" by Ouchi Shinko Chemical Industrial Co., Ltd.), N-phenyl-N'-(3-methacryloyloxy-2-hydroxypropyl)p-phenylenediamine (e.g., "Nocrac G-1" by Ouchi Shinko Chemical Industrial Co., Ltd.), 4-acetoxy-2,2,6,6-tetramethylpiperidine, 4-stearoyloxy-2,2,6,6-tetramethylpiperidine, 4-acryloyloxy-2,2,6,6-tetramethylpiperidine, 4-(phenylacetoxy)-2,2,6,6-tetramethylpiperidine, 4-benzoyloxy-2,2,6,6-tetramethylpiperidine, 4-methoxy-2,2,6,6-tetramethylpiperidine, 4-steayloxy-2,2,6,6-tetramethylpiperidine, 4-cyclohexyloxy-2,2,6,6-tetramethylpiperidine, 4-benzyloxy-2,2,6,6-tetramethylpiperidine, 4-phenoxy-2,2,6,6-tetramethylpiperidine, 4-(ethylcarbamoyloxy)-2,2,6,6-tetramethylpiperidine, 4-(cyclohexylcarbamoyloxy)-2,2,6,6-tetramethylpiperidine, 4-(phenylcarbamoyloxy)-2,2,6,6-tetramethylpiperidine, bis(2,2,6,6-tetramethyl-4-piperidyl) carbonate, bis(2,2,6,6-tetramethyl-4-piperidyl) oxalate, bis(2,2,6,6-tetramethyl-4-piperidyl) malonate, bis(2,2,6,6-tetramethyl-4-piperidyl) sebacate, bis(2,2,6,6-tetramethyl-4-piperidyl) adipate, bis(2,2,6,6-tetramethyl-4-piperidyl) terephthalate, 1,2-bis(2,2,6,6-tetramethyl-4-piperidyloxy)ethane, $\alpha$,$\alpha$'-bis(2,2,6,6-tetramethyl-4-piperidyloxy)-p-xylene, bis(2,2,6,6-tetramethyl-4-piperidyl)tolylene-2,4-dicarbamate, bis(2,2,6,6-tetramethyl-4-piperidyl)hexamethylene-1,6-dicarbamate, tris(2,2,6,6-tetramethyl-4-piperidyl)benzene-1,3,5-tricarboxylate, tris(2,2,6,6-tetramethyl-4-piperidyl)benzene-1,3,4-tricarboxylate, 1-[2-{3-(3,5-di-tert-butyl-4-hydroxyphenyl)propionyloxy}butyl]-4-[3-(3,5-di-tert-bu tyl-4-hydroxyphenyl)propionyloxy]-2,2,6,6-tetramethylpiperidine, condensate of 1,2,3,4-butanetetracarboxylic acid, 1,2,2,6,6-pentamethyl-4-piperidinol and $\beta$,$\beta$,$\beta$',$\beta$'-tetramethyl-3,9-[2,4,8,10-tetroxaspiro[5.5]undecane]diethanol.

The carbodiimide compound includes a monocarbodiimide and a polycarbodiimide, and from the viewpoint of heat resistance, a polycarbodiimide is preferred. More specifically, the polycarbodiimide is preferably a compound having a recurring unit represented by the following general formula (I).

$$-\!\!\left[ N{=}C{=}N{-}X_1 \right]\!\!- \qquad (I)$$

In the general formula (I), $X_1$ represents a divalent hydrocarbon group. The divalent hydrocarbon group includes a linear aliphatic group, a cyclic structure-containing aliphatic group, and an aromatic ring-containing group. The carbon number of the linear aliphatic group is 1 or more, preferably 1 to 20, more preferably 6 to 18, the carbon number of the alicyclic structure-containing aliphatic group and the aromatic ring-containing group is preferably 5 or more, more preferably 6 to 20, even more preferably 6 to 18. The hydrocarbon group may have a substituent such as an amino group, a hydroxy group and an alkoxy group.

The polycarbodiimide includes an aliphatic polycarbodiimide, an aromatic polycarbodiimide, and a mixture thereof. Among these, an aliphatic polycarbodiimide is preferred from the viewpoint of the chemical resistance and the molding workability of the molded article to be obtained.

Preferably, the aliphatic polycarbodiimide is a polycarbodiimide having a recurring unit represented by the general formula (I) in which $X_1$ is a linear aliphatic group or an alicyclic structure-containing aliphatic group. More preferably, $X_1$ is a group selected from the group consisting of an alkylene group having 3 to 18 carbon atoms, a divalent group represented by the following general formula (II), and a divalent group represented by the following general formula (III), even more preferably a divalent group represented by the following general formula (III).

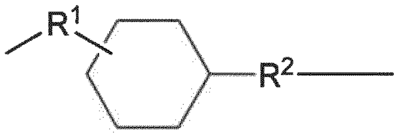

(II)

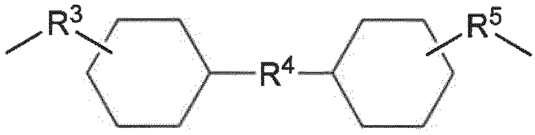

(III)

In the general formula (II) and the general formula (III), $R^1$ to $R^5$ each independently represent a single bond, or an alkylene group having 1 to 8 carbon atoms. $R^1$ and $R^2$ in the general formula (II) each are preferably a single bond. $R^3$ and $R^5$ in the general formula (III) each are preferably a single bond, $R^4$ is preferably an alkylene group having 1 to 6 carbon atoms, more preferably an alkylene group having 1 to 3 carbon atoms.

[Other Components]

As needed, the polyamide resin composition of the present invention may optionally contain any other components such as a different kind of polymer, a filler, a crystal nucleating agent, a colorant, an antistatic agent, a plasticizer, a lubricant, a flame retardant, and a flame retardant promoter.

Examples of the other kind of polymer include polyether resins such as polyacetal, and polyphenylene oxide; polysulfone resins such as polysulfone and polyether sulfone; polythioether resins such as polyphenylene sulfide, and polythioether sulfone; polyketone resins such as polyether ether ketone, and polyallylether ketone; polynitrile resins such as polyacrylonitrile, polymethacrylonitrile, acrylonitrile-styrene copolymer, acrylonitrile-butadiene-styrene copolymer, and methacrylonitrile-butadiene-styrene copolymer; polymethacrylate resins such as polymethyl methacrylate, and polyethyl methacrylate; polyvinyl ester resins such as polyvinyl acetate; polyvinyl chloride resins such as polyvinylidene chloride, polyvinyl chloride, vinyl chloride-vinylidene chloride copolymer, and vinylidene chloride-methyl acrylate copolymer; cellulose resins such as cellulose acetate, and cellulose butyrate; fluororesins such as polyvinylidene fluoride, polyvinyl fluoride, ethylene-tetrafluoroethylene copolymer, polychlorotrifluoroethylene, ethylene -chlorotrifluoroethylene copolymer, tetrafluoroethylene-hexafluoropropylene copolymer, and tetrafluoroethylene-hexafluoropropylene-vinylidene fluoride copolymer; polycarbonate resins; polyimide resins such as thermoplastic polyimide, polyamideimide, and polyether imide; and thermoplastic polyurethane resins.

Examples of the filler include a fibrous filler such as glass fibers, and a powder filler such as calcium carbonate, wollastonite, silica, silica alumina, alumina, titanium dioxide, potassium titanate, magnesium hydroxide and molybdenum disulfide; and a flaky filler such as hydrotalcite, glass flakes, mica, clay, montmorillonite and kaolin.

Not specifically limited, the crystal nucleating agent may be any one generally usable as a crystal nucleating agent for polyamide, and examples thereof include talc, calcium stearate, aluminum stearate, barium stearate, zinc stearate, antinomy oxide, magnesium oxide, and an arbitrary mixture of these. Among these, from the viewpoint of the significant effect of increasing the crystallization speed for polyamide, talc is preferred. The crystal nucleating agent may be processed with a silane coupling agent or a titanium coupling agent for the purpose of enhancing the compatibility thereof with polyamide.

Not specifically limited, the colorant can be appropriately selected from inorganic or organic pigments and dyes in accordance with the intended use of the polyamide resin composition. The colorant that may be blended in a polyamide resin composition for use for tubes for chemical liquid transportation is preferably a black inorganic pigment such as carbon black, lamp black, acetylene black, bone black, thermal black, channel black, furnace black and titanium black.

Not specifically limited, the antistatic agent may be an organic material or an inorganic material. Examples of the organic antistatic agent include ionic compounds such as lithium ion salt, quaternary ammonium salt, and an ionic liquid; and electron-conductive polymer compounds such as polythiophene, polyaniline, polypyrrole, and polyacetylene. The inorganic antistatic agent includes metal oxide-based conductive agents such as ATO, ITO, PTO, GZO, antimony pentoxide, and zinc oxide; and carbon-based conductive agents such as carbon nanotubes, and fullerenes. From the viewpoint of heat resistance, inorganic antistatic agents are preferred. A colorant, carbon black can also function as an antistatic agent.

Not specifically limited, the plasticizer may be any plasticizer generally usable for polyamide, and examples thereof include benzenesulfonic acid alkylamide compounds, toluenesulfonic acid alkylamide compounds, alkyl hydroxybenzoate compounds, and hydroxybenzoic acid alkylamide compounds.

Not specifically limited, the lubricant may be any lubricant generally usable for polyamide, and examples thereof

include higher fatty acid compounds, oxy-fatty acid compounds, fatty acid amide compounds, alkylenebis-fatty acid amide compounds, fatty acid lower alcohol ester compounds, metal soap compounds, and polyolefin wax. Fatty acid amide compounds, for example, stearoamide, palmitamide, methylenebisstearylamide and ethylenebisstearylamide are preferred as having an excellent external lubrication effect.

The content of these other components in the polyamide resin composition is preferably 50% by mass or less relative to 100% by mass of the polyamide resin composition, more preferably 20% by mass or less, even more preferably 5% by mass or less.

[Method for Production of Polyamide Resin Composition]

A method for producing the polyamide resin composition of the present invention includes a step of melt-kneading the above-mentioned mixture containing a semi-aromatic polyamide and an elastomer, in which, therefore, the terminal group of the semi-aromatic polyamide and the modified moiety of the elastomer interact with each other, and the resultant resin composition can be excellent in flexibility and impact resistance.

The temperature and the time for melt-kneading can be appropriately controlled depending on the melting point of the semi-aromatic polyamide to be used, but from the viewpoint of preventing the elastomer polymerizability from lowering, the melt-kneading temperature is preferably 380°C or lower, more preferably 370°C or lower, even more preferably 360°C or lower. The melt-kneading time is preferably 1 to 5 minutes or so.

The melt-kneading method is not specifically limited, and a method capable of uniformly mixing a semi-aromatic polyamide, an elastomer and other components mentioned above is preferably employed. A single-screw extruder, a twin-screw extruder, a kneader, and a Banbury mixer are preferred. From the viewpoint of good dispersibility of elastomer and industrial productivity, a twin-screw extruder is more preferred.

In the case where a component such as a carbodiimide compound capable of reacting with the terminal group of a semi-aromatic polyamide and the modified moiety of an elastomer is blended as a deterioration inhibitor, the deterioration inhibitor may be added after the semi-aromatic polyamide and the elastomer have been melt-kneaded in order that the interaction between the semi-aromatic polyamide and elastomer during melt-kneading thereof can be prevented from being inhibited by the deterioration inhibitor. Specifically, the production method is preferably such that, after a semi-aromatic polyamide and an elastomer modified with an unsaturated compound having at least one selected from a carboxy group and an acid anhydride group are melt-kneaded, a carbodiimide compound is further added thereto and melt-kneaded to produce a polyamide resin composition.

Specifically in the case where a twin-screw extruder is used as a melt-kneading device, preferably, a mixture prepared by dry-blending a semi-aromatic polyamide, an elastomer, and other optional components is put into a twin-screw extruder from the first feed mouth at the root thereof, and a deterioration inhibitor is put thereinto from the second feed mouth provided between the first kneading zone and the second kneading zone arranged to the screws. At that time, as needed, the deterioration inhibitor may be dry-blended with a semi-aromatic polyamide and put into the extruder.

<Tube>

[Method for Production of Tube]

Preferably, the tube of the present invention is a tube formed of the above-mentioned polyamide resin composition.

The production method for the tube of the present invention is not specifically limited, and a known method of extrusion molding or blow molding can be employed. For example, herein employable is a method of extrusion molding for simultaneous lamination inside or outside a die, using a number of extruders corresponding to the number of the layers or the materials (co-extrusion method), or a method of previously preparing a single-layer tube and then integrally laminating a resin on the outside of the tube successively and optionally using an adhesive (coating method).

In the case where a tube having a waved region is produced, first, a straight tube is formed and then further processed by molding to have a desired waved shape.

[Tube Configuration]

The outer diameter of the tube is planned in consideration of the flow rate of the liquid to run inside the tube. The wall thickness of the tube is so planned that the permeability of the internal substances does not increase, that the necessary tube burst pressure can be maintained and that the tube can maintain flexibility to enough to facilitate tube assembly work and to well control vibration resistance in use. Preferably, the outer diameter of the tube is 2.5 to 300 mm and the wall thickness thereof is 0.5 to 30 mm.

The tube of the present invention is good to contain at least one layer containing the polyamide resin composition

described herein and may be formed of a single layer or 2 or more layers. In the case where the tube is formed of 2 or more layers, preferably, the layer containing the polyamide resin composition is an innermost layer of the tube, for the purpose of reducing the flow resistance of the fluid running inside it and for reducing unnecessary residues.

In the case where the tube is a multilayer tube, the material to constitute the other layer is not specifically limited but is preferably a thermoplastic resin from the viewpoint of tube moldability.

The thermoplastic resin may be appropriately selected in consideration of use of the tube and adhesiveness to neighboring layers. Specifically, examples thereof include polyester resins such as polybutylene terephthalate, polyethylene terephthalate, polyethylene naphthalate, polybutylene naphthalate, and polyethylene isophthalate; fluororesins such as ethylene-tetrafluoroethylene copolymer (ETFE), vinylidene fluoride polymer (PVDF), polychlorotrifluoroethylene, ethylene-chlorotrifluoroethylene copolymer, tetrafluoroethylene-hexafluoropropylene copolymer, and tetrafluoroethylene-hexafluoropropylene-vinylidene fluoride copolymer; polyolefin resins such as polyethylene, polypropylene, polystyrene, and saponified product of ethylene-vinyl acetate copolymer (EVOH); polyether resins such as polyacetal, and polyphenylene sulfide; and polyamide resins such as semi-aromatic polyamide, and aliphatic polyamide.

(Morphology)

The tube of the present invention contains a layer that contains 60 to 80% by mass of the above-mentioned semi-aromatic polyamide and 15 to 40% by mass of the above-mentioned elastomer, wherein the layer has a phase-separated structure containing a phase (A) that contains the semi-aromatic polyamide, and a phase (B) that contains the elastomer, and the phase (A) is a continuous phase and the phase (B) is a disperse phase dispersed in the phase (A). The above layer has a so-called sea-island structure where the phase (A) is a sea phase and the phase (B) is an island phase, and therefore can well exhibit the properties of each phase to express excellent flexibility and moldability. The phase-separated structure is a phase-separated structure formed by reaction of the semi-aromatic polyamide and the elastomer.

The "phase (A) that contains the semi-aromatic polyamide" is a phase containing the semi-aromatic polyamide in an amount of more than 50% by mass in the phase, and the "phase (B) that contains the elastomer" is a phase containing the elastomer in an amount of more than 50% by mass.

In a cross-sectional image of the layer as observed with an electron microscope, the average number of the phase (B) having a major axis diameter of 2 μm or more and existing per 100 square μm is 1/100 $\mu m^2$ or less, more preferably 0.5/100 $\mu m^2$ or less, even more preferably nearer to 0/100 $\mu m^2$. When the average number exceeds 1/100 $\mu m^2$ or less, the surface smoothness is poor, flow resistance of the fluid running inside the tube occurs, and residues may remain inside the tube.

The average number (/100 $\mu m^2$) is a value calculated by measuring the total number of the phase (B) having a major axis diameter of 2 μm or more using a field emission scanning electron microscope (FE-SEM) for arbitrary 6 sections of 10 μm × 10 μm in a cross-section (cut edge) of the layer when the tube is cut into round slices and dividing the total number by the total area thereof (10 μm × 10 μm × 6 sections).

The phase (B) having a major axis diameter of 2 μm or more can be analyzed based on the images taken with a field emission scanning electron microscope and using an ordinary image analysis software system.

(Surface Roughness (arithmetic average roughness Ra))

The surface of the tube is preferably a smooth surface with no irregularity for reducing the flow resistance of the fluid running inside the tube and for reducing unnecessary residues. Specifically, the surface roughness Ra of the layer, as measured according to JIS B 0601 (1982), is preferably 0.4 μm or less, more preferably 0.35 μm or less, even more preferably 0.3 μm or less.

(Flexural Modulus)

The tube of the present invention has excellent flexibility.

Specifically, the flexural modulus of a test piece having a thickness of 4 mm prepared by injection-molding the polyamide resin composition of the present invention for use for tube, as measured at 23°C according to ISO 178 (4th Ed., 2001) is preferably 1.8 GPa or less, more preferably 1.7 GPa or less, even more preferably 1.6 GPa or less. The flexural modulus is, from the viewpoint of not interfering with the function as tube, preferably 0.3 GPa or more.

Specifically, the flexural modulus can be determined according to the method described in the section of Examples.

(Heat Distortion Temperature)

The tube of the present invention has excellent heat resistance. Using the polyamide resin composition of the present invention that maintains excellent heat resistance of a semi-aromatic polyamide, the tube can readily express the heat resistance.
Specifically, the heat distortion temperature is such that the heat distortion temperature of a test piece having a thickness of 4 mm prepared by injection-molding the polyamide resin composition of the present invention for use for tube, as measured according to ISO 75 (3rd Ed., 2013) is preferably 70°C or higher, more preferably 90°C or higher, even more preferably 100°C or higher. The upper limit of the heat distortion temperature is not limited so far as the tube function and the advantageous effects of the present invention are not damaged.
Specifically, the heat distortion temperature can be determined according to the method described in the section of Examples.

[Use]

The tube of the present invention consists primarily of a polyamide resin composition, and therefore exhibits excellent chemical resistance and heat resistance. Further, since the polyamide resin composition contains a specific amount of an elastomer and the content concentration of the unsaturated compound having a carboxy group and/or an acid anhydride group in the elastomer falls within a specific range, the tube is also excellent in moldability and flexibility.
Consequently, the tube is usable for automobile parts, internal-combustion engine use, crude oil drilling and transportation use, electric and electronic parts, medical treatment, household utensils and office supplies, and construction-related parts. In particular, as excellent in chemical resistance and heat resistance, the tube is used as fuel tubes such as feed tubes, return tubes, evaporation tubes, fuel filler tubes, ORVR tubes, reserve tubes, and vent tubes; and also as oil tubes, oil drilling tubes, brake tubes, window washer liquid tubes, engine coolant (LLC) tubes, reservoir tank tubes, urea solution transport tubes, cooler tubes for cooling water or refrigerants, tubes for air conditioner refrigerants, heater tubes, road heating tubes, floor heating tubes, infrastructure supply tubes, tubes for extinguishers and fire-extinguishing systems, tubes for cooling machines for medical use, ink tubes, paint spraying tubes, blow-by tubes, and other chemical liquid tubes. In particular, the tube is favorably used as engine coolant tubes, urea water tubes, fuel tubes, oil drilling tubes, and blow-by tubes.

Examples

Hereinunder the present invention is described more specifically with reference to Examples and Comparative Examples, but the present invention is not limited to these.
Physical properties in Examples, Comparative Examples and Production Examples were measured according to the methods mentioned below.

Inherent Viscosity

The semi-aromatic polyamide (sample) produced in Production Examples was dissolved in a solvent of concentrated sulfuric acid to prepare a solution having a concentration of 0.2 g/dl, and the inherent viscosity (dl/g) thereof at a temperature of 30°C was determined according to the following relational expression.

$$\eta_{inh} = [\ln(t_1/t_0)]/c$$

In the above relational expression, $\eta_{inh}$ represents an inherent viscosity (dl/g), $t_0$ represents a flow time (sec) of the solvent (concentrated sulfuric acid), $t_1$ represents a flow time (sec) of the sample solution, and c represents a sample concentration (g/dl) in the sample solution (that is, 0.2 g/dl).

Melting Point

The melting point of the semi-aromatic polyamide produced in Production Examples was measured using a differential scanning colorimeter "DSC 7020" by Hitachi High-Tech Corporation.
The melting point was measured according to ISO 11357-3 (2nd Ed., 2011). Specifically, the sample (polyamide) was heated from 30°C up to 340°C in a nitrogen atmosphere at a rate of 10°C/min, and kept at 340°C for 5 minutes to be completely dissolved, and then cooled down to 50°C at a rate of 10°C/min, and kept at 50°C for 5 minutes. Again, this was heated up to 340°C at a rate of 10°C/min, and the peak temperature of the melting peak appearing during the

heating was referred to as a melting point (°C) of the sample. In the case where plural melting peaks appeared, the peak temperature of the melting peak on the highest temperature side was referred to as the melting point (°C).

Terminal Amino Group Concentration

One g of the semi-aromatic polyamide produced in Production Examples was dissolved in 35 mL of phenol, and 2 mL of methanol was mixed therein to give a sample solution. This was titrated with an aqueous solution of 0.01 N hydrochloric acid, using thymol blue as an indicator to measure the terminal amino group content ($[NH_2]$, unit: μeq/g) of the semi-aromatic polyamide.

Total Concentration of Carboxy Group and/or Acid Anhydride Group in Elastomer

One g of an elastomer as a sample was dissolved in 170 mL of toluene, and 30 mL of ethanol was further added thereto to prepare a sample solution. The sample solution was titrated with a 0.1 N KOH/ethanol solution, using phenolphthalein as an indicator to determine the total concentration of the carboxy group and the acid anhydride group in the sample.

<<Formation of Tube>>

A single-layer cross-head die was connected to a single-screw extruder (DHS40-25, ϕ40 mm, L/D = 28, full-flat screw, compression ratio 3) by IKG Corporation, and the polyamide resin composition prepared in Examples and Comparative Examples was melted at an extrusion temperature of 300°C and molded into a tubular article. Subsequently, this was cooled in a vacuum sizing tank for dimension control, and taken out at a rate of 10 m/min to produce a tube having an inner diameter of 6 mm and an outer diameter of 8 mm.

Morphology Observation (average number of disperse phase (B) having a major axis diameter of 2 μm or more)

The tube produced according to the above-mentioned method was cut in the radial direction, and after surface-shaping with a freezing ultramicrotome (ULTRACUT UC-S/FC-S by LEICA Corporation), the cut section was stained with ruthenium tetroxide, then osmium-coated, and observed with a field emission scanning electron microscope (Regulus 8220 by Hitachi High-Tech Corporation), an image (FE-SEM image) to take an image (FE-SEM image) thereof.

The components constituting each phase were identified by energy dispersive X-ray analysis during the above FE-SEM observation.

In the 3500-power image taken according to the above method, the major axis diameter (major axis dispersion diameter) of the disperse phase (B) recognized in arbitrary 6 sections of 100 square μm (10 μm × 10 μm) was measured, and the total number of the disperse phase (B) having a major axis diameter of 2 μm or more was divided by the total area (10 μm × 10 μm × 6 sections) to calculate the average number (/100 μm$^2$) of the disperse phase (B) having a major axis diameter of 2 μm or more.

Surface Roughness (arithmetic average roughness Ra) (moldability)

The tube produced according to the above-mentioned method and having a predetermined length was halved in the lengthwise direction, and the roughness of the inner surface in the lengthwise direction was measured. For the measurement, a surface roughness meter (SE 700) by Kosaka Laboratory Ltd. was used according to JIS B 0601 (1982) (speed 0.1 mm/sec, measurement length 1.25 mm). Every tube was measured three times, and the resultant data were averaged to be a measured value.

<<Production of Test Piece>>

Using an injection-molding machine by Sumitomo Heavy Industries, Ltd. (clamping force: 100 ton, screw diameter: ϕ32 mm) and using a T-runner mold, the polyamide resin composition produced in Examples and Comparative Examples was molded at a cylinder temperature higher by 20 to 30°C than the melting point of the semi-aromatic polyamide and at a mold temperature of 140°C to give a multi-purpose test piece Type A1 (dumbbell-shaped test piece described in JIS K7139; 4 mm thick, total length 170 mm, parallel section length 80 mm, parallel section width 10 mm). From the multi-purpose test piece, a rectangular parallel-piped test piece (dimension: length × width × thickness = 80 mm × 10 mm × 4 mm) was cut out to be a sample piece for evaluation of flexural modulus and heat distortion temperature.

Flexural Modulus (flexibility)

The flexural modulus (GPa) at 23°C and 50% RH of the test piece prepared according to the above-mentioned method was measured using Autograph (by Shimadzu Corporation) according to ISO 178 (4th Ed., 2001).

Heat Distortion Temperature (heat resistance)

The heat distortion temperature (°C) of the test piece prepared according to the above-mentioned method was measured using an HDT tester "S-3M" by Toyo Seiki Seisaku-sho, Ltd., according to ISO 75 (3rd Ed., 2013).

Production Example 1 [Production of semi-aromatic polyamide A-1]

9870.6 g (59.42 mol) of terephthalic acid, 9497.4 g (60.00 mol) of a mixture [50/50 (by mol)] of 1,9-nonanediamine and 2-methyl-1,8-octanediamine, 142.9 g (1.17 mol) of benzoic acid, 19.5 g (0.1% by mass relative to the total mass of raw materials) of sodium hypophosphite monohydrate and 5 liters of distilled water were put into an autoclave having an internal volume of 40 liters, and purged with nitrogen. These were stirred at 100°C for 30 minutes, and the temperature inside the autoclave was heated up to 220°C taking 2 hours. At that time, the pressure inside the autoclave was increased up to 2 MPa. The reaction was continued as such for 2 hours, and then this was heated up to 230°C, then kept at 230°C for 2 hours, and further reacted while the pressure was lowered down to 2 MPa by gradually removing steam. Next, the pressure was lowered to 1 MPa taking 30 minutes, and this was further reacted for 1 hours to give a prepolymer having an inherent viscosity [$\eta$] of 0.2 dL/g. Using a flake crusher by Hosokawa Micron Corporation, this was crushed into a particle size of 2 mm or less, dried at 100°C under reduced pressure for 12 hours, and then polymerized in a solid phase at 230°C and 13 Pa (0.1 mmHg) for 10 hours to give a white polyamide resin (polyamide 1). The polyamide 1 was composed of a terephthalic acid unit, and a 1,9-nonanediamine unit and a 2-methyl-1,8-octanediamine unit (1,9-nonanediamine unit/2-methyl-1,8-octanediamine unit = 50/50 (by mol)), and has a melting point of 265°C, an inherent viscosity [$\eta_{inh}$] of 1.20 dL/g, and a terminal amino group concentration ([$NH_2$]) of 15 $\mu$eq/g.

Example 1, Example 2, Comparative Example 2 (Production of polyamide resin composition)

The semi-aromatic polyamide, the elastomer and also the deterioration inhibitor C-3, the lubricant and the dye shown in Table 1 were premixed in a predetermined ratio by mass, and put into a twin-screw extruder ("TEM-26SS" by Shibaura Machine Co., Ltd.) via the upstream feed mouth thereof. The deterioration inhibitor C-1 was put thereinto via an intermediate feed mouth between the first kneading zone and the second kneading zone of screw. These were melt-kneaded and extruded at a cylinder temperature of 300 to 320°C, then cooled and pelletized to give polyamide resin composition pellets. The pellets were molded into test pieces and tubes for evaluation of physical properties, and according to the above-mentioned methods, various evaluations were carried out. The results are shown in Table 1.

Example 3, Comparative Example 1

The semi-aromatic polyamide, the elastomer, the deterioration inhibitor C-2 or C-3, and also the lubricant and the dye shown in Table 1 were premixed in a predetermined ratio by mass, put into a twin-screw extruder ("TEM-26SS" by Shibaura Machine Co., Ltd.) via the upstream feed mouth thereof all at a time, and melt-kneaded and extruded at a cylinder temperature of 300 to 320°C, then cooled and pelletized to give polyamide resin composition pellets. The pellets were molded into test pieces and tubes for evaluation of physical properties, and according to the above-mentioned methods, various evaluations were carried out. The results are shown in Table 1.

The components shown in Table 1 are as follows.

<Semi-aromatic polyamide A-1>

Semi-aromatic polyamide A-1 produced in Production Example 1.

<Elastomer B-1>

Elastomer prepared by modifying ethylene-butene copolymer with maleic anhydride (by Mitsui Chemical Corporation, Tafmer MH5010, acid anhydride group concentration: 50 $\mu$eq/g)

<Elastomer B-2>

Elastomer prepared by modifying ethylene-butene copolymer with maleic anhydride (by Mitsui Chemical Corporation, Tafmer MH5020, acid anhydride group concentration: 100 μeq/g)

<Elastomer B-3>

Elastomer prepared by modifying ethylene-butene copolymer with maleic anhydride (by Mitsui Chemical Corporation, Tafmer MH5040, acid anhydride group concentration: 200 μeq/g)

<Elastomer B-4>

Elastomer prepared by modifying ethylene-propylene copolymer with maleic anhydride (by Mitsui Chemical Corporation, Tafmer MP0620, acid anhydride group concentration: 100 μeq/g)

<Deterioration Inhibitor C-1>

Alicyclic polycarbodiimide (by Nisshinbo Chemical Inc., Carbodilite HMV-15CA)

<Deterioration Inhibitor C-2>

Copper-based stabilizer (by Polyad Service Corporation, KG HS01-P, molar ratio: halogen/copper = 10/1)

<Deterioration Inhibitor C-3>

Hindered phenol compound (by Sumitomo Chemical Co., Ltd., SUMILIZER GA-80)

<Lubricant D-1>

Polyolefin wax (by Clariant Chemicals Ltd., LICOCENE PE MA4221)

<Lubricant D-2>

Montanic acid-based wax (by Clariant Chemicals Ltd., LICOWAX OP)

<Dye E-1>

Carbon black (by Mitsubishi Chemical Corporation, #980B)

Table 1

| | | | unit | Example 1 | Example 2 | Example 3 | Comparative Example 1 | Comparative Example 2 |
|---|---|---|---|---|---|---|---|---|
| Polyamide Resin Composition | Semi-Aromatic Polyamide | A-1 | mass% | 68.0 | 68.0 | 79.0 | 88.9 | 68.0 |
| | Elastomer | B-1 | mass% | | | | 9.9 | 29.2 |
| | | B-2 | mass% | 29.2 | | | | |
| | | B-3 | mass% | | 29.2 | | | |
| | | B-4 | mass% | | | 19.7 | | |
| | Deterioration Inhibitor | C-1 | mass% | 1.0 | 1.0 | | | 1.0 |
| | | C-2 | mass% | | | 0.8 | | |
| | | C-3 | mass% | 1.0 | 1.0 | | 1.0 | 1.0 |
| | Lubricant | D-1 | mass% | 0.6 | 0.6 | | | 0.6 |
| | | D-2 | mass% | | | 0.3 | | |
| | Dye | E-1 | mass% | 0.2 | 0.2 | 0.2 | 0.2 | 0.2 |
| | Terminal Amino Group Amount | - | μeq/g | 15 | 15 | 15 | 15 | 15 |
| | Total Concentration of Carboxy Group and Acid Anhydride Group | - | μeq/g | 100 | 200 | 100 | 50 | 50 |
| Average Number of Disperse Phase (B) having major axis diameter of 2 μm or more | | - | - | 0 | 0 | 0 | 0 | 3 |
| Surface Roughness | | - | μm | 0.3 | 0.3 | 0.3 | 0.2 | 0.5 |

(continued)

| Table 1 | | | | | | | |
|---|---|---|---|---|---|---|---|
| | | unit | Example 1 | Example 2 | Example 3 | Comparative Example 1 | Comparative Example 2 |
| Flexural Modulus | - | GPa | 1.1 | 1.1 | 1.5 | 1.9 | 1.1 |
| Heat Distortion Temperature | - | °C | 103 | 103 | 105 | 110 | 103 |

From Table 1, it is known that the tubes of Examples 1 to 3 satisfy both low flexural modulus and high surface smoothness while retaining heat resistance that the semi-aromatic polyamide has. The tube of Comparative Example 1 has high heat resistance and surface smoothness but is insufficient in flexibility. The tube of Comparative Example 2 is excellent in heat resistance and flexibility but is insufficient in surface smoothness since the average number of the disperse phase (B) having a major axis diameter of 2 μm or more is 3.

When the concentration of the unsaturated compound having a carboxy group and/or an acid anhydride group in the elastomer falls within a specific range, the affinity between the elastomer and the polyamide increases, and in the case, therefore, the elastomer is prevented from aggregating to bring about a cause of degradation in surface smoothness during extrusion molding and is also prevented from being released to cause die droop, and accordingly it is presumed that a tube excellent in surface smoothness can be formed of the composition containing a large amount of the elastomer.

## Claims

**1.** A tube comprising a layer that contains 60 to 80% by mass of a semi-aromatic polyamide and 15 to 40% by mass of an elastomer modified with an unsaturated compound having at least one selected from a carboxy group and an acid anhydride group, wherein:

the layer has a phase-separated structure containing a phase (A) that contains the semi-aromatic polyamide, and a phase (B) that contains the elastomer, and the phase (A) is a continuous phase and the phase (B) is a disperse phase dispersed in the phase (A), and
in a cross-sectional image of the layer as observed with an electron microscope, the average number of the phase (B) having a major axis diameter of 2 μm or more and existing per 100 square μm is 1/100 $\mu m^2$ or less.

**2.** The tube according to claim 1, wherein the surface roughness (Ra) of the layer, as measured according to JIS B 0601 (1982), is 0.4 μm or less.

**3.** The tube according to claim 1 or 2, wherein the layer is an innermost layer.

**4.** The tube according to any of claims 1 to 3, wherein the phase-separated structure is a phase-separated structure formed by reaction of the semi-aromatic polyamide and the elastomer.

**5.** The tube according to any of claims 1 to 4, which is formed of a polyamide resin composition, and wherein:

the polyamide resin composition is prepared by melt-kneading 60 to 80% by mass of a semi-aromatic polyamide and 15 to 40% by mass of an elastomer modified with an unsaturated compound having at least one selected from a carboxy group and an acid anhydride group, and
the total concentration of the carboxy group and the acid anhydride group in 1 g of the elastomer is 85 to 250 μeq/g.

**6.** The tube according to any of claims 1 to 5, wherein the semi-aromatic polyamide is a semi-aromatic polyamide that contains a dicarboxylic acid unit containing at least one selected from a terephthalic acid unit and a naphthalenedicarboxylic acid unit in an amount of 50 mol% or more relative to all the dicarboxylic acid units, and a diamine unit containing an aliphatic diamine unit having 4 to 13 carbon atoms in an amount of 60 mol% or more relative to all the diamine units.

**7.** The tube according to claim 6, wherein the aliphatic diamine unit is at least one selected from units derived from 1,4-butanediamine, 1,6-hexanediamine, 1,9-nonanediamine, 2-methyl-1,8-octanediamine and 1,10-decanediamine.

**8.** The tube according to claim 6, wherein the aliphatic diamine unit is a unit derived from at least one selected from 1,9-nonanediamine and 2-methyl- 1,8-octanediamine.

**9.** The tube according to any of claims 1 to 8, wherein the layer further contains 0.3 to 5% by mass of a carbodiimide compound.

**10.** The tube according to any of claims 1 to 9, which is an extrusion-molded article or a blow-molded article.

**11.** The tube according to claim 10, which is a fuel tube, an engine coolant tube, an urea solution transport tube, an air

conditioner coolant tube, an oil drilling tube or a blow-by tube.

**12.** A polyamide resin composition prepared by melt-kneading 60 to 80% by mass of a semi-aromatic polyamide and 15 to 40% by mass of an elastomer modified with an unsaturated compound having at least one selected from a carboxy group and an acid anhydride group, wherein the total concentration of the carboxy group and the acid anhydride group in 1 g of the elastomer is 85 to 250 μeq/g.

**13.** The polyamide resin composition according to claim 12, wherein the semi-aromatic polyamide is a semi-aromatic polyamide that contains a dicarboxylic acid unit containing at least one selected from a terephthalic acid unit and a naphthalenedicarboxylic acid unit in an amount of 50 mol% or more relative to all the dicarboxylic acid units, and a diamine unit containing an aliphatic diamine unit having 4 to 13 carbon atoms in an amount of 60 mol% or more relative to all the diamine units.

**14.** The polyamide resin composition according to claim 13, wherein the aliphatic diamine unit is at least one selected from the group consisting of units derived from 1,4-butanediamine, 1,6-hexanediamine, 1,9-nonanediamine, 2-methyl-1,8-octanediamine and 1,10-decanediamine.

**15.** The polyamide resin composition according to claim 13, wherein the aliphatic diamine unit is a unit derived from at least one selected from 1,9-nonanediamine and 2-methyl-1,8-octanediamine.

**16.** The polyamide resin composition according to any of claims 12 to 15, wherein the polyamide resin composition further contains 0.3 to 5% by mass of a carbodiimide compound.

**17.** A method for producing a polyamide resin composition, comprising melt-kneading a semi-aromatic polyamide and an elastomer modified with an unsaturated compound having at least one selected from a carboxy group and an acid anhydride group, then adding a carbodiimide compound thereto and further melt-mixing them.

**18.** The method for producing a polyamide resin composition according to claim 17, wherein the semi-aromatic polyamide accounts for 60 to 80% by mass, the elastomer accounts for 15 to 40% by mass, and the total concentration of the carboxy group and the acid anhydride group in 1 g of the elastomer is 85 to 250 μeq/g.

**INTERNATIONAL SEARCH REPORT**

International application No. PCT/JP2020/006623

A. CLASSIFICATION OF SUBJECT MATTER
C08J 3/20(2006.01)i; C08L 23/26(2006.01)i; C08L 77/06(2006.01)i
FI: C08L77/06; C08L23/26; C08J3/20 Z CFG
According to International Patent Classification (IPC) or to both national classification and IPC

B. FIELDS SEARCHED
Minimum documentation searched (classification system followed by classification symbols)
C08J3/20; C08L23/26; C08L77/06

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2017-52819 A (MITSUBISHI GAS CHEMICAL CO., INC.) 16.03.2017 (2017-03-16) claims, paragraphs [0029], [0035], examples | 1-5, 9-12, 16-18<br>6-8, 13-15 |
| X<br>A | JP 2015-199876 A (UNITIKA LTD.) 12.11.2015 (2015-11-12) examples, table 2 | 12-14<br>1-11, 15-18 |
| X | WO 2017/115699 A1 (KURARAY CO., LTD.) 06.07.2017 (2017-07-06) claims, paragraphs [0071]-[0072], [0085], examples | 1-18 |
| A | JP 2015-104830 A (UBE INDUSTRIES, LTD.) 08.06.2015 (2015-06-08) claims, paragraph [0079], examples | 1-18 |
| A | JP 2018-197562 A (UBE INDUSTRIES, LTD.) 13.12.2018 (2018-12-13) claims, paragraphs [0076], [0116], examples | 1-18 |
| A | WO 2019/035484 A1 (MITSUI CHEMICALS, INC.) 21.02.2019 (2019-02-21) claims, examples | 1-18 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 08 May 2020 (08.05.2020) | 19 May 2020 (19.05.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No. PCT/JP2020/006623

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:

See extra sheet

1. ☐ As all required additional search fees were timely paid by the applicant, this international search report covers all searchable claims.
2. ☒ As all searchable claims could be searched without effort justifying additional fees, this Authority did not invite payment of additional fees.
3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (January 2015)

**INTERNATIONAL SEARCH REPORT**
Information on patent family members

International application No.
PCT/JP2020/006623

| Patent Documents referred in the Report | Publication Date | Patent Family | Publication Date |
|---|---|---|---|
| JP 2017-52819 A | 16 Mar. 2017 | (Family: none) | |
| JP 2015-199876 A | 12 Nov. 2015 | (Family: none) | |
| WO 2017/115699 A1 | 06 Jul. 2017 | (Family: none) | |
| JP 2015-104830 A | 08 Jun. 2015 | (Family: none) | |
| JP 2018-197562 A | 13 Dec. 2018 | (Family: none) | |
| WO 2019/035484 A1 | 21 Feb. 2019 | (Family: none) | |

Form PCT/ISA/210 (patent family annex) (January 2015)

INTERNATIONAL SEARCH REPORT

International application No. PCT/JP2020/006623

<Continuation of Box No. III>

Document 1: JP 2017-52819 A (MITSUBISHI GAS CHEMICAL CO. INC.) 16.03.2017 (2017-03-16), claims, paragraphs [0029], [0035], examples (Family: none)

The claims are classified into the following three inventions.

(Invention 1) Claims 1-4 and 6-11 (parts referring to claims 1-4)

The invention in claims 1-2 is disclosed in document 1 (claims, paragraph [0035], and examples) and lacks novelty in light of document 1, and thus the invention does not have a special technical feature. However, claim 3, which is dependent on claim 1, has the special technical feature of a tube defined in claim 1, wherein the layer is an innermost layer of the tube, and claim 4 also has the same technical feature as claim 3. Therefore, claims 1-4 and claims 6-11 referring to claims 1-4 are classified as invention 1.

(Invention 2) Claims 5, 6-11 (parts referring to claim 5), and 12-16

Claim 5 cannot be said to share an identical or corresponding technical feature with claim 3 classified as invention 1.

Moreover, claim 5 is not dependent on claim 1. Furthermore, claim 5 is not substantially identical or equivalent to any of the claims classified as invention 1.

Therefore, claim 5 cannot be classified as invention 1.

In addition, the invention in claim 5 is disclosed in document 1 (claims, paragraph [0035], and examples) and lacks novelty in light of document 1, and thus the invention does not have a special technical feature. However, claim 6, which is dependent on claim 5, has the special technical feature of a tube defined in claim 5, wherein a semi-aromatic polyamide has: a dicarboxylic acid unit including at least 50 mol% of at least one selected from terephthalic acid and naphthalene dicarboxylic acid units with respect to the entire dicarboxylic acid unit; and a diamine unit including at least 60 mol% of a C4-13 aliphatic diamine unit with respect to the entire diamine unit, and claims 7-11 also have the same technical feature as claim 6. Moreover, claims 12-16 are substantially identical or equivalent to claim 5 and claims 6-9 referring to claim 5.

Therefore, claim 5, claims 6-11 referring to claim 5, and claims 12-16 are classified as invention 2.

(Invention 3) Claims 17-18

Claims 17-18 cannot be said to share an identical or corresponding technical feature with claim 3 classified as invention 1 or claim 6 classified as invention 2.

Moreover, claims 17-18 are not dependent on any of claims 1 and 5. Furthermore, claims 17-18 are not substantially identical or equivalent to any of the claims classified as invention 1 or invention 2.

Therefore, claims 17-18 cannot be classified as any of invention 1 and invention 2.

In addition, claims 17-18 have the special technical feature of a method for producing a polyamide resin composition, the method including: melt-kneading a semi-aromatic polyamide, and an elastomer which is modified with an unsaturated compound having at least one selected from a carboxyl group and an acid anhydride group; then further adding a carbodiimide compound thereto; and melt-kneading the resultant, and thus are classified as invention 3.

Form PCT/ISA/210 (extra sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006176597 A
- JP 2015501341 A
- WO 2017115699 A